# EUROPEAN PATENT APPLICATION

(11) **EP 4 439 762 A1**
(43) Date of publication of application: **02.10.2024**
(21) Application number: 23218118.0
(22) Date of filing: 19.12.2023
(51) Int. Cl.: H01M 10/0525, H01M 10/0569, H01M 10/0587, H01M 50/103, H01M 50/15, H01M 50/538, H01M 50/55, H01M 50/682, H01M 10/0585

(54) **STORAGE DEVICE**

(30) Priority: 01.02.2023 JP 2023014085
(71) Applicant: Prime Planet Energy & Solutions, Inc., Chuo-ku Tokyo 103-0022 (JP)
(72) Inventor: YANASE, Shota, Tokyo, 103-0022 (JP); TSUSHIMA, Tatsuya, Tokyo, 103-0022 (JP); ONIZUKA, Hiroshi, Tokyo, 103-0022 (JP)
(74) Representative: Kuhnen & Wacker Patent- und Rechtsanwaltsbüro PartG mbB

(57) **Abstract**

A storage device (100) disclosed herein includes an electrode body (20) including a first electrode (22), an electrolyte (80), and a case (10). The electrode body (20) includes a first electrode tab group (23). The case (10) includes a case body (12) including a bottom wall (12a) and a sealing plate (14). When the storage device (100) is in a fully charged state, a liquid level (80H) of an excess electrolyte (80) that is the electrolyte present between the case body (12) and the electrode body (20) is located closer to the sealing plate (14) than a portion (23b) of the first electrode tab group (23) that is closest to the bottom wall (12a).

## Description

### BACKGROUND OF THE DISCLOSURE

### 1. Field

The present disclosure relates to a storage device.

### 2. Background

Japanese Laid-open Patent Publication No. 2022-074818 discloses a battery including a wound electrode body. The wound electrode body includes a positive electrode tab group in one end portion in a winding axis direction and a negative electrode tab group in the other end portion in the winding axis direction. In the battery, the wound electrode body is accommodated in a battery case in an arrangement in which each of the positive electrode tab group and the negative electrode tab group protrudes toward corresponding one of side walls of the battery case.

Japanese Laid-open Patent Publication No. 2015-153727 discloses a lithium-ion secondary battery in which a lower end portion of a wound electrode body is immersed in an electrolyte. It is described in Japanese Laid-open Patent Publication No. 2015-153727 that, in the battery, excellent cycle durability can be realized by defining a position of a liquid level of the electrolyte with respect to a height of the electrolyte of the wound electrode body and a position of a joining portion of the electrode body and a current collector terminal. Japanese Laid-open Patent Publication No. 2022-090917 discloses a technology for shortening a time required for a liquid injecting process of injecting an electrolyte into a battery case.

### SUMMARY

Incidentally, in a storage device including an electrolyte that contains a lithium salt and an electrode body that includes an electrode tab group (a positive electrode tab group and/or a negative electrode tab group), lithium deposition is likely to occur in a vicinity of the electrode tab group.

Therefore, it is a major object of the present disclosure to provide a storage device in which a lithium salt is less likely to be deposited in a vicinity of an electrode tab group.

A storage device disclosed herein includes an electrode body including a first electrode and a second electrode, an electrolyte including an organic solvent and a lithium salt, and a case accommodating the electrode body and the electrolyte. The electrode body includes a first electrode tab group including a plurality of first electrode tabs that protrude from a first end portion, and a second electrode tab group including a plurality of second electrode tabs that protrude from a second end portion. The case includes a case body including a bottom wall, a pair of first side walls extending from the bottom wall and opposed to each other, a pair of second side walls extending from the bottom wall and opposed to each other, and an opening opposed to the bottom wall, and a sealing plate that seals the opening. The first electrode tab group is arranged at a side of the electrode body at one of the pair of second side walls, and the second electrode tab group is arranged on a side of the electrode body at the other one of the pair of second side walls. When the storage device is in a fully charged state, the storage device includes an excess electrolyte that is the electrolyte present between the case body and the electrode body in a state where a perpendicular direction to the bottom wall is a vertical direction, and a liquid level of the excess electrolyte is located closer to the sealing plate than a portion of the first electrode tab group that is closest to the bottom wall.

In the storage device having the above-described configuration, at least a portion of the first electrode tab group is immersed in the excess electrolyte. Thus, a lithium salt concentration can be easily made uniform in a vicinity of the first electrode tab group. As a result, a lithium salt is less likely to be deposited in the vicinity of the electrode tab group.

The above and other elements, features, steps, characteristics and advantages of the present invention will become more apparent from the following detailed description of the preferred embodiments with reference to the attached drawings.

### BRIEF DESCRIPTION OF THE DRAWINGS

FIG. 1 is a diagram illustrating a current density distribution in each of a positive electrode and a negative electrode of a wound electrode body.
FIG. 2 is a perspective view of a storage device according to a first preferred embodiment.
FIG. 3 is a cross-sectional view taken along line III-III of FIG. 2.
FIG. 4 is a cross-sectional view taken along line IV-IV of FIG. 2.
FIG. 5 is a cross-sectional view taken along line V-V of FIG. 2.
FIG. 6 is a perspective view schematically illustrating an electrode body group mounted on a sealing plate.
FIG. 7 is a perspective view schematically illustrating an electrode body.
FIG. 8 is a perspective view schematically illustrating a configuration of the electrode body.
FIG. 9 is a cross-sectional view of a storage device according to a second preferred embodiment, corresponding to FIG. 3.

### DETAILED DESCRIPTION OF THE PREFERRED EMBODIMENTS

Preferred embodiments of a technology disclosed herein will be described below with reference to the accompanying drawings. Matters other than matters specifically mentioned in this specification and necessary for carrying out the present disclosure (for example, general configuration and manufacturing process of a battery that do not characterize the present disclosure) can be understood as design matters for those skilled in the art based on the related art in the related field. The present disclosure can be carried out based on contents disclosed in this specification and the common general technical knowledge in the field. The following description is not intended to be limiting the technology disclosed herein to the following preferred embodiments. In this specification, the notation "A to B" (herein each of A and B is an arbitrary numerical value) that indicates a range means "A or more and B or less" and also includes "a range that exceeds A and is less than B," "a range that exceeds A and is equal to or less than B," and "a range that is equal to or more than A and less than B."

As used in this specification, the term "storage device" refers to a power device that can perform charging and discharging. Storage devices (power storage devices) include butteries, such as a secondary battery (a nonaqueous electrolyte secondary battery, such as a lithium-ion secondary battery or the like), or the like, and capacitors (physical batteries), such as an electric double layer capacitor or the like.

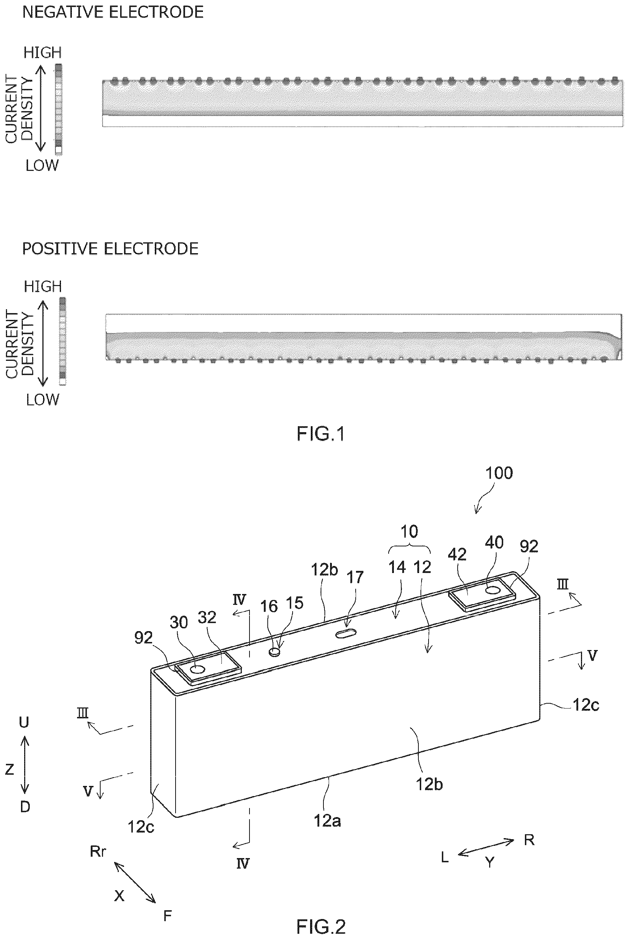

Although not limiting the present technology at all, according to an examination of the inventor of the present disclosure, it is presumed that lithium deposition in a vicinity of an electrode tab group occurs by a mechanism described below. That is, first, when a storage device is quickly charged, a lithium salt concentration in an end portion of an electrode body provided with an electrode tab is lower than that in a central portion of the electrode body and that of an excess electrolyte (specifically, the lithium salt concentration of the excess electrolyte is lower than the lithium salt concentration in the central portion of the electrode body). In the vicinity of the electrode tab, exchange of the electrolyte is less likely to occur and the lithium salt concentration is less likely to be made uniform, so that the lithium salt concentration in the vicinity of the electrode tab is maintained relatively low. As a result, a portion in which the lithium salt concentration is low has a high reaction resistance, and therefore, presumably, a current tends to concentrate in the vicinity of electrode tab, so that lithium deposition is likely to occur (a high-rate resistance is reduced). FIG. 1 is a diagram illustrating a current density distribution in each of a positive electrode and a negative electrode of a wound electrode body. As illustrated in FIG. 1, it is understood that, in a vicinity of each of a positive electrode tab and a negative electrode tab, a current density is high. Based on the above-described finding, the inventor of the present disclosure completed the technology described herein.

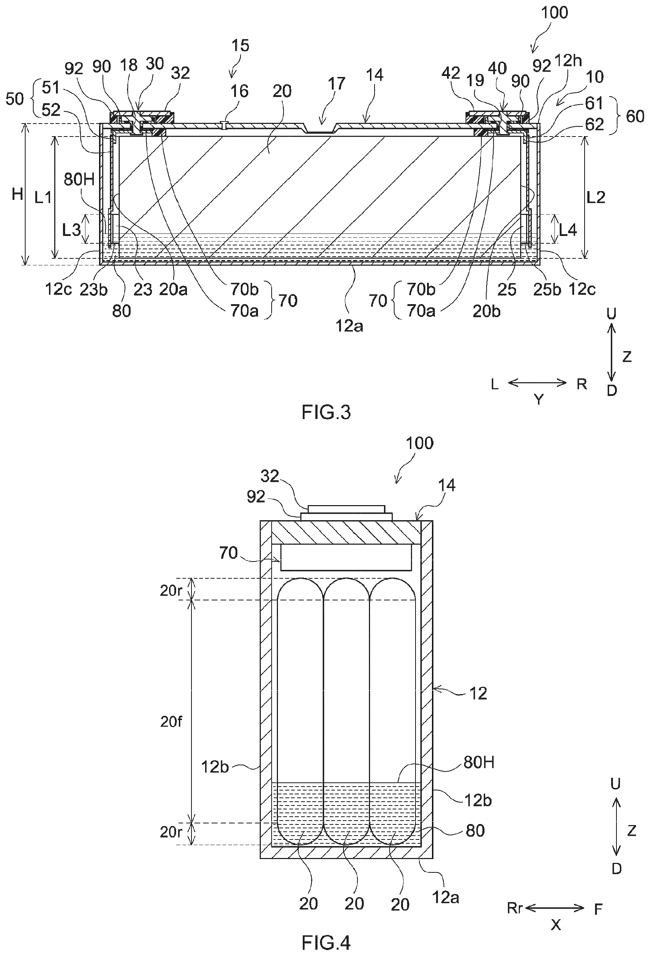

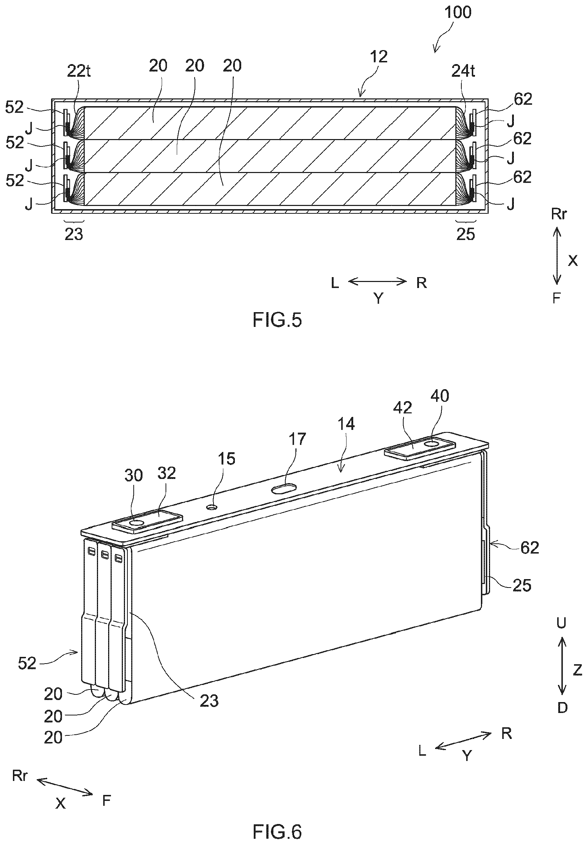

FIG. 2 is a perspective view of a storage device 100. FIG. 3 is a cross-sectional view taken along line III-III of FIG. 2. FIG. 4 is a cross-sectional view taken along line taken along line IV-IV of FIG. 2. FIG. 5 is a cross-sectional view taken along line taken along line V-V of FIG. 2. In the following description, reference signs L, R, F, Rr, U, and D in the drawings denote left, right, front, rear, up, and down, respectively, and reference signs X, Y, and Z in the drawings denote a short side direction of the storage device 100, a long side direction thereof orthogonal to the short side direction, and an up-down direction thereof orthogonal to the short side direction, respectively. However, these directions are defined for convenience of explanation, and do not limit an installation form of the storage device 100. Note that each of the accompanying drawings is schematic and a dimensional relation (of length, width, thickness, or the like) does not necessarily reflect an actual dimensional relation. In the drawings described below, the members and parts with the same operation are denoted by the same reference signs and the overlapping description may be omitted or simplified.

As illustrated in FIG. 3, the storage device 100 includes a case 10, an electrode body 20, and an electrolyte 80. In addition, the storage device 100 according to this preferred embodiment further includes a first electrode terminal 30, a first electrode external conductive member 32, a second electrode terminal 40, a second electrode external conductive member 42, a gasket 90, an exterior insulating member 92, a first electrode current collector 50, a second electrode current collector 60, and an interior insulating member 70. Herein, the storage device 100 is a lithium-ion secondary battery.

The case 10 is a housing that accommodates the electrode body group 20. Herein, the case 10 has a flat and bottomed rectangular parallelopiped (rectangle) outer shape. A conventionally used material may be used for the case 10, and there is no particular limitation thereon. The case 10 is preferably made of a metal having a predetermined strength. Examples of metal materials of this type include, for example, aluminum, aluminum alloy, iron, iron alloy, or the like.

The case 10 includes a case body 12, a sealing plate 14, and a gas exhaust valve 17. The case body 12 is a flat rectangular (hexahedral) container with an opening 12h at one side. Specifically, as illustrated in FIG. 2, the case body 12 includes an approximately rectangular bottom wall 12a, a pair of first side walls 12b extending upward U from long sides of the bottom wall 12a and opposed to each other, and a pair of second side walls 12c extending upward U from short sides of the bottom wall 12a and opposed to each other. An area of the second side wall 12c is smaller than an area of the first side wall 12b. The opening 12h is formed in an upper surface of the case body 12 surrounded by the pair of first side walls 12b and the pair of second side walls 12c. The sealing plate 14 is mounted on the case body 12 so as to seal the opening 12h of the case body 12. The sealing plate 14 is an approximately rectangular plate material when viewed from top. The sealing plate 14 is opposed to the bottom wall 12a of the case body 12. The case 10 is formed by joining (for example, welding joining) the sealing plate 14 to a peripheral edge of the opening 12h of the case body 12. Joining of the sealing plate 14 can be performed by welding, such as, for example, laser welding or the like.

As illustrated in FIG. 2 and FIG. 3, the gas exhaust valve 17 is formed in the sealing plate 14. The gas exhaust valve 17 is configured to open and discharge gas in the case 10 when a pressure in the case 10 is a predetermined value or more.

In addition to the gas exhaust valve 17, a liquid injection hole 15 and two terminal insertion holes 18 and 19 are provided in the sealing plate 14. The liquid injection hole 15 is an opening that communicates with an internal space of the case body 12 and is provided for injecting an electrolyte in a manufacturing process of the storage device 100. The liquid injection hole 15 is sealed by a sealing member 16. As the sealing member 16, for example, a blind rivet is preferably used. Thus, the sealing member 16 can be firmly fixed inside the case 10.

FIG. 6 is a perspective view schematically illustrating the electrode body 20 mounted on the sealing plate 14. In this preferred embodiment, a plurality of (three herein) electrode body 20 are accommodated in the case 10. Note that there is no particular limitation on a number of the electrode bodies 20 accommodated in one case 10, and the number of the electrode bodies 20 may be one and may be two or more (plural). As illustrated in FIG. 3, the first electrode current collector 50 is arranged on one side of each electrode body 20 in a long side direction Y (a left side in FIG. 3) and the second electrode current collector 60 is arranged on the other side thereof in the long side direction Y (a right side in FIG. 3). The plurality of electrode bodies 20 are connected in parallel. However, the plurality of electrode bodies 20 may be connected in series. Note that the electrode bodies 20 may be accommodated inside the case body 12 of the case 10 such that a winding axis WL extends along the bottom wall 12a in a state of being covered by an insulating sheet made of a resin sheet. The insulating sheet may have, for example, a bag shape or a box shape, and may be formed into a box shape by folding one or more sheets.

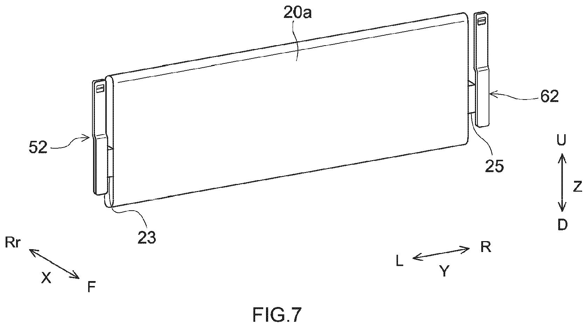

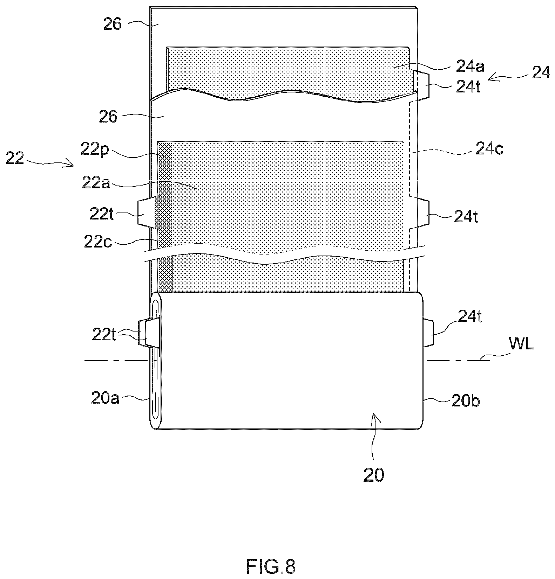

FIG. 7 is a perspective view schematically illustrating the electrode body 20. FIG. 8 is a schematic view illustrating a configuration of the electrode body 20. As illustrated in FIG. 8, the electrode body 20 includes a first electrode 22, a second electrode 24, and a separator 26. The electrode body 20 is herein a wound electrode body formed by stacking the strip-shaped first electrode 22 and the strip-shaped second electrode 24 with two strip-shaped separators 26 interposed therebetween and winding the stacked body with the winding axis WL as a center. However, a configuration of the electrode body is not limiting the technology disclosed herein. For example, the electrode body may be a stacked electrode body formed by stacking a plurality of quadrangular (typically, rectangular) first electrodes and a plurality of quadrangular (typically, rectangular) second electrodes in a state of being insulated from each other.

Note that each of the first electrode 22 and the second electrode 24 can be a positive electrode or a negative electrode. For example, the first electrode 22 may be a negative electrode and the second electrode 24 may be a positive electrode. However, it is preferable that the first electrode 22 is a positive electrode and the second electrode 24 is a negative electrode. The first electrode 22 and the second electrode 24 are different electrodes from each other. In this preferred embodiment, the first electrode 22 is a positive electrode and the second electrode 24 is a negative electrode.

The electrode body 20 has a flat shape. The electrode body 20 is arranged inside the case body 12 such that the winding axis WL extends approximately in parallel to the long side direction Y. That is, the electrode body 20 is arranged inside the case body 12 such that a thickness direction X of the storage device 100 (a perpendicular direction to the first side walls 12b of the case 10) match a thickness direction of the electrode body 20. Specifically, as illustrated in FIG. 4, the electrode body 20 includes a pair of curved portions (R portions) 20r opposed to the bottom wall 12a of the case body 12 and the sealing plate 14 and a flat portion 20f that connects the pair of curved portions 20r and is opposed to the first side walls 12b of the case body 12. The flat portion 20f extends along the first side walls 12b.

The present technology preferably exhibits its effect also in a storage device including a wide electrode body in which unevenness of a salt concentration in an electrolyte is likely to occur. In the wide electrode body, liquid exchange is less likely to occur inside and outside the electrode body, and thus, unevenness of the salt concentration is likely to occur. Therefore, an aspect ratio of the electrode body 20 (width (length in the long side direction Y)/height (length in the up-down direction Z)) may be, for example, 2 or more, or 2.3 or more.

As illustrated in FIG. 8, the first electrode 22 (a positive electrode herein) includes a first electrode current collector 22c, a first electrode active material layer 22a fixed to at least one surface of the first electrode current collector 22c, and a first electrode protective layer 22p. However, the first electrode protective layer 22p is not essential and can be omitted in other preferred embodiments. The first electrode current collector 22c has a strip shape. The first electrode current collector 22c is formed of a conductive metal, such as, for example, aluminum, aluminum alloy, nickel, stainless steel, or the like. The first electrode current collector 22c is a metal foil, specifically, an aluminum foil herein.

A plurality of first electrode tabs 22t are provided in one end portion of the first electrode current collector 22c in an axis direction of the winding axis WL (a first end portion 20a of the electrode body 20, a left end portion in FIG. 8). The plurality of first electrode tabs 22t are provided at intervals (intermittently) along a longitudinal direction of the strip-shaped first electrode 22. Each of the first electrode tabs 22t has a raised shape, is located at one side in the axis direction of the winding axis WL (a side of the first end portion 20a of the electrode body 20, a left side in FIG. 8), and protrudes outward from the separator 26. The first electrode tab 22t is a portion of the first electrode current collector 22c and is formed of a metal foil (an aluminum foil). However, the first electrode tab 22t may be a separate member from the first electrode current collector 22c. The first electrode active material layer 22a and the first electrode protective layer 22p are not formed in at least a portion of the first electrode tab 22t, and the first electrode current collector 22c is exposed in the portion.

As illustrated in FIG. 5, the plurality of first electrode tabs 22t are stacked in the one end portion in the axis direction of the winding axis WL (a left end portion in FIG. 5) to form a first electrode tab group 23. As illustrated in FIG. 3, the first electrode tab group 23 protrudes from the first end portion 20a of the electrode body 20. Inside the case 10, the first electrode tab group 23 is arranged at a side of one of the second side walls 12c of the case body 12 (a left side in FIG. 1). Each of the plurality of first electrode tabs 22t is connected to the first electrode current collector 50 in a bent state. Thus, a size of a body portion of the electrode body 20 that is accommodated in the case 10 can be increased, so that a high energy density of the storage device 100 can be achieved. Note that each of the plurality of first electrode tabs 22t may not be bent.

The present technology exhibits its effect more in an electrode body including an electrode tab having a raised (tab-like) portion that is electrically connected to an electrode terminal than in an electrode body in which a current collecting exposed portion that is electrically connected to an electrode terminal is formed in a strip shape (that is, an electrode body including a current collecting exposed portion throughout a height direction of the electrode body). This is because, with the raised electrode tab provided, a current is likely to concentrate in a vicinity of the electrode tab, so that lithium deposition is likely to occur.

As illustrated in FIG. 3, in a perpendicular direction to the bottom wall 12a of the case body 12 (the up-down direction Z), a ratio (L3/L1) of a length L3 of the first electrode tab group 23 with respect to a length L1 of the first end portion 20a of the electrode body 20 is, for example, 0.1 or more and preferably 0.2 or more. Also, the ratio (L3/L1) is, for example, 0.5 or less, and is preferably 0.4 or less. Note that the length L3 of the first electrode tab group 23 is a largest length of the first electrode tab group 23 in the up-down direction Z.

As illustrated in FIG. 3, the first electrode tab group 23 is electrically connected to the first electrode terminal 30 via the first electrode current collector 50. The first electrode current collector 50 herein includes a first electrode first current collector 51 and a first electrode second current collector 52. The first electrode first current collector 51 and the first electrode second current collector 52 are preferably formed of a metal of the same type as that of the first electrode current collector 22c and can be formed of a conductive metal, such as, for example, aluminum, aluminum alloy, or the like. The first electrode tab group 23 and the first electrode second current collector 52 are connected at a connection portion J (see FIG. 5). The connection portion J can be, for example, an ultrasonic joining portion, a laser welding portion, or the like. Moreover, the first electrode second current collector 52 and the first electrode first current collector 51 are electrically connected (see FIG. 3). The first electrode first current collector 51 is electrically connected to the first electrode terminal 30 (see FIG. 3).

In this preferred embodiment, as illustrated in FIG. 3, the first electrode first current collector 51 includes a first area extending along an inner surface of the sealing plate 14 and a second area extending along an inner surface of the second side wall 12c of the case 10. The first area is electrically connected to the first electrode terminal 30. The second area is electrically connected to the first electrode second current collector 52. The first electrode first current collector 51 may be formed by bending a single member, for example, by a pressing work or the like, and may be formed by integrating a plurality of members by welding joining or the like. Herein, the first electrode first current collector 51 is fixed to the sealing plate 14 by a caulking work.

In this preferred embodiment, as illustrated in FIG. 3, the first electrode second current collector 52 extends along an inner surface of the second side wall 12c of the case 10 (in the up-down direction Z). In this preferred embodiment, the first electrode second current collector 52 includes an inclined portion between an upper end portion connected to the first electrode first current collector 51 and a lower end portion connected to the first electrode tab group 23. However, the first electrode second current collector 52 may not include the inclined portion.

As illustrated in FIG. 3, the first electrode terminal 30 is inserted through a terminal insertion hole 18 formed in one end portion (a left end portion in FIG. 3) of the sealing plate 14 in the long side direction Y. The first electrode terminal 30 is fixed to the sealing plate 14. The first electrode terminal 30 is preferably formed of a metal, and is more preferably formed of, for example, aluminum or aluminum alloy. At least a portion of the first electrode terminal 30 protrudes from an outer surface of the case 10. Herein, the first electrode terminal 30 is electrically connected to the first electrode first current collector 51 inside the case 10. Herein, the first electrode terminal 30 is caulked to a peripheral edge portion of the terminal insertion hole 18 by a caulking work or the like.

The first electrode terminal 30 is insulated from the sealing plate 14 by the interior insulating member 70 and the gasket 90. Note that the interior insulating member 70 includes a base portion 70a provided between the first electrode first current collector 51 and the sealing plate 14 and a protruding portion 70b that protrudes from the base portion 70a toward the electrode body 20. With the protruding portion 70b, movement of the electrode body 20 is restricted and contact of the sealing plate 14 with the electrode body 20 can be prevented. On the other hand, outside the case 10, the first electrode terminal 30 is connected to the first electrode external conductive member 32. The first electrode external conductive member 32 is a member to which an external member, such as a bus bar or the like, can be attached. The exterior insulating member 92 is arranged between the first electrode external conductive member 32 and an outer surface of the sealing plate 14. The first electrode external conductive member 32 and the sealing plate 14 are insulated from each other by the exterior insulating member 92. Note that the first electrode external conductive member 32 and the exterior insulating member 92 are not essential components and can be omitted as appropriate. The interior insulating member 70, the gasket 90, and the exterior insulating member 92 can be formed of a synthetic resin material, that is, for example, a fluororesin, such as perfluoro alkoxyalkane (PFA), polytetrafluoroethylene (PTFE), or the like, polyphenylene sulfide (PPS), or the like.

As illustrated in FIG. 8, the first electrode active material layer 22a is provided in a strip shape along the longitudinal direction of the strip-shaped first electrode current collector 22c. The first electrode active material layer 22a includes an active material (for example, lithium-transition metal compound oxide, such as lithium nickel cobalt manganese composite oxide or the like) that can reversibly store and release a charge carrier. When it is assumed that an entire solid content of the first electrode active material layer 22a is 100 mass%, the active material may occupy generally 80 mass% or more, typically 90 mass% or more, and, for example, 95 mass% or more. The first electrode active material layer 22a may include an optional component, such as, for example, a conductive material, a binder, various additive components, or the like, in addition to the active material. As the conductive material, a carbon material, such as, for example, acetylene black (AB) or the like, can be used. As the binder, for example, polyvinylidene fluoride (PVdF) or the like can be used.

The present technology preferably exhibits its effect also in a storage device (a high-capacity storage device) including a wide electrode body in which unevenness of a salt concentration in an electrolyte is likely to occur. Therefore, a width of the first electrode active material layer 22a (a length in the axis direction of the winding axis WL) may be, for example, 10 cm or more, 20 cm or more, or 25 cm or more.

As illustrated in FIG. 8, the first electrode protective layer 22p is provided in a boundary portion between the first electrode current collector 22c and the first electrode active material layer 22a in the long side direction Y. Herein, the first electrode protective layer 22p is provided in one end portion of the first electrode current collector 22c in the axis direction of the winding axis WL (the left end portion in FIG. 8). The first electrode protective layer 22p is provided in a strip shape along the first electrode active material layer 22a. The first electrode protective layer 22p includes an inorganic filler (for example, alumina). The first electrode protective layer 22p may include an optional component, such as, for example, a conductive material, a binder, various additive components, or the like, in addition to the inorganic filler. The conductive material and the binder may be the same as those described above as examples that can be included in the first electrode active material layer 22a.

As illustrated in FIG. 8, the second electrode 24 (a negative electrode herein) includes a second electrode current collector 24c and a second electrode active material layer 24a fixed to at least one surface of the second electrode current collector 24c. The second electrode current collector 24c has a strip shape. The second electrode current collector 24c is formed of a conductive metal, such as, for example, copper, copper alloy, nickel, stainless steel, or the like. The second electrode current collector 24c is a metal foil, specifically, a copper foil herein.

A plurality of second electrode tabs 24t are provided in one end portion of the second electrode current collector 24c in the axis direction of the winding axis WL (a second end portion 20b of the electrode body 20, a right end portion in FIG. 8). The second electrode tabs 24t are provided at an opposite side to the side at which the first electrode tabs 22t are provided in the axis direction of the winding axis WL. The plurality of second electrode tabs 24t are provided at intervals (intermittently) along a longitudinal direction of the strip-shaped second electrode 24. Each of the plurality of second electrode tabs 24t has a raised shape, is located at one side in the axis direction of the winding axis WL (a side of the second end portion 20b of the electrode body 20, a right side in FIG. 8), and protrudes outward from the separator 26. The second electrode tab 24t is a portion of the second electrode current collector 24c and is formed of a metal foil (a copper foil). However, the second electrode tab 24t may be a separate member from the second electrode current collector 24c. The second electrode active material layer 24a is not formed at least in a portion of the second electrode tab 24t, and an area where the second electrode current collector 24c is exposed is provided.

As illustrated in FIG. 5, the plurality of second electrode tabs 24t are stacked at the one end portion in the axis direction of the winding axis WL (a right end portion in FIG. 5) to form a second electrode tab group 25. In a height direction of the storage device 100 (the up-down direction Z), the second electrode tab group 25 can be located at the same height as a height at which the first electrode tab group 23 is located or can be located closer to the sealing plate 14 (higher) than the first electrode tab group 23 (that is, the first electrode tab group 23 can be located closer to the bottom wall 12a (lower) than the second electrode tab group 25). Preferably, the first electrode tab group 23 and the second electrode tab group 25 are provided at the same height (relative positions).

As illustrated in FIG. 3, the second electrode tab group 25 protrudes from the second end portion 20b of the electrode body 20. Inside the case 10, the second electrode tab group 25 is arranged at one side (a right side in FIG. 1, an opposite side to the side at which the first electrode tab group 23 is arranged) of the second side walls 12c of the case body 12. Each of the plurality of second electrode tabs 24t is connected to the second electrode current collector 60 in a bent state. Thus, the size of the body portion of the electrode body 20 that is accommodated in the case 10 can be increased, so that a high energy density of the storage device 100 can be achieved. Note that each of the plurality of second electrode tabs 24t may not be bent.

As illustrated in FIG. 3, in the perpendicular direction to the bottom wall 12a of the case body 12 (the up-down direction Z), a ratio (L4/L2) of a length L4 of the second electrode tab group 25 with respect to a length L2 of the second end portion 20b of the electrode body 20 is, for example, 0.1 or more and preferably 0.2 or more. Also, the ratio (L4/L2) is 0.5 or less and preferably 0.4 or less. Herein, the length L4 of the second electrode tab group 25 is a largest length of the second electrode tab group 25 in the up-down direction Z. Note that the length L1 of the first end portion 20a and the length L2 of the second end portion 20b may be different lengths but preferably are equal lengths (the same lengths or lengths a difference between which is 5% or less). Also, the length L3 of the first electrode tab group 23 and the length L4 of the second electrode tab group 25 may be different lengths but preferably are equal lengths (the same lengths or lengths a difference between which is 5% or less).

As illustrated in FIG. 3, the second electrode tab group 25 is electrically connected to the second electrode terminal 40 via the second electrode current collector 60. Herein, the second electrode current collector 60 includes a second electrode first current collector 61 and a second electrode second current collector 62. The second electrode first current collector 61 and the second electrode second current collector 62 are preferably formed of a metal of the same type as the second electrode current collector 24c and can be formed of a conductive metal, such as, for example, copper, copper alloy, or the like. The second electrode tab group 25 and the second electrode second current collector 62 are connected at a connection portion J (see FIG. 5). Moreover, the second electrode second current collector 62 and the second electrode first current collector 61 are electrically connected (see FIG. 3). The second electrode first current collector 61 is electrically connected to the second electrode terminal 40 (see FIG. 3).

In this preferred embodiment, as illustrated in FIG. 3, the second electrode first current collector 61 includes a first area extending along the inner surface of the sealing plate 14 and a second area extending along an inner surface of the second side wall 12c of the case 10. The first area is electrically connected to the second electrode terminal 40. The second area is electrically connected to the second electrode second current collector 62. The second electrode first current collector 61 may be formed by bending a single member, for example, by a pressing work or the like, and may be formed by integrating a plurality of members by welding joining or the like. The second electrode first current collector 61 is fixed to the sealing plate 14 by a caulking work herein.

In this preferred embodiment, as illustrated in FIG. 3, the second electrode second current collector 62 extends along the inner surface of the second side wall 12c of the case 10 (in the up-down direction Z). In this preferred embodiment, the second electrode second current collector 62 includes an inclined portion between an upper end portion connected to the second electrode first current collector 61 and a lower end portion connected to the second electrode tab group 25. However, the second electrode second current collector 62 may not include the inclined portion.

As illustrated in FIG. 3, the second electrode terminal 40 is inserted through a terminal insertion hole 19 formed in one end portion (a right end portion in FIG. 3) of the sealing plate 14 in the long side direction Y. The second electrode terminal 40 is fixed to the sealing plate 14. The second electrode terminal 40 is preferably formed of a metal, and is more preferably formed of, for example, copper or copper alloy. At least a portion of the second electrode terminal 40 is exposed at an outer surface of the case 10. Herein, the second electrode terminal 40 is electrically connected to the second electrode first current collector 61 inside the case 10. Herein, the second electrode terminal 40 is caulked to a peripheral edge portion of the terminal insertion hole 19 by a caulking work or the like.

The second electrode terminal 40 is insulated from the sealing plate 14 by the interior insulating member 70 and the gasket 90. Note that details of the interior insulating member 70 are similar to those in contents described above for the first electrode terminal 30 and will be therefore omitted. Outside the case 10, the second electrode terminal 40 is connected to the second electrode external conductive member 42. The second electrode external conductive member 42 is a member to which an external member, such as a bus bar or the like, can be attached. An exterior insulating member 92 is arranged between the second electrode external conductive member 42 and the outer surface of the sealing plate 14. The second electrode external conductive member 42 and the sealing plate 14 are insulated from each other by the exterior insulating member 92. Note that the second electrode external conductive member 42 and the exterior insulating member 92 are not essential components and can be omitted as appropriate.

As illustrated in FIG. 8, the second electrode active material layer 24a is provided in a strip shape along the longitudinal direction of the strip-shaped second electrode current collector 24c. The second electrode active material layer 24a includes an active material (for example, a carbon material, such as graphite or the like) that can reversibly store and release a charge carrier. When it is assumed that an entire solid content of the second electrode active material layer 24a is 100 mass%, the active material may occupy generally 80 mass% or more, typically 90 mass% or more, and, for example, 95 mass% or more. The second electrode active material layer 24a may include an optional component, such as, for example, a binder, a dispersant, various additive components, or the like, in addition to the active material. As the binder, rubbers, such as, for example, styrene butadiene rubber (SBR) or the like, can be used. As the dispersant, celluloses, such as, for example, carboxymethyl cellulose (CMC) or the like, can be used.

The present technology preferably exhibits its effect also in a storage device (a high-capacity storage device) including a wide electrode body in which unevenness of a salt concentration in an electrolyte is likely to occur. Therefore, a width of the second electrode active material layer 24a (a length in the axis direction of the winding axis WL) may be, for example, 10 cm or more, 20 cm or more, or 25 cm or more.

As illustrated in FIG. 8, the separator 26 is a member that insulates the first electrode 22 and the second electrode 24 from each other. As the separator 26, a porous resin sheet formed of polyolefin resin, such as, for example, polyethylene (PE), polypropylene (PP), or the like, is preferable. The separator 26 may include a base portion formed of a porous resin sheet and a heat resistance layer (HRL) provided at least on one surface of the base portion and including an inorganic filler. As the inorganic filler, for example, alumina, boehmite, aluminum hydroxide, titania, or the like can be used.

The electrolyte 80 is, for example, a nonaqueous electrolyte containing an organic solvent and a supporting salt. As the organic solvent, an aprotic solvent, such as carbonates, esters, ethers, or the like, can be used. Among them, carbonates, for example, ethylene carbonate (EC), diethyl carbonate (DEC), dimethyl carbonate (DMC), ethyl methyl carbonate (EMC), or the like, can be preferably employed. Alternatively, a fluorine-based solvent of fluorinated carbonate, such as monofluoroethylene carbonate (MFEC), difluoroethylene carbonate (DFEC), monofluoromethyl difluoromethyl carbonate (F-DMC), trifluorodimethyl carbonate (TFDMC), or the like, can be preferably used. One of the above-described organic solvents can be individually used or two or more thereof can be combined as appropriate and used. As the supporting salt, a lithium salt, such as for example, LiPF₆, LiBF₄, LiClO₄, or the like, can be preferably used. A concentration of the supporting salt is not particularly limited, but is preferably, for example, about 0.7 mol/L or more and about 1.3 mol/L or less. Note that the electrolyte 80 may include some other component than the above-described organic solvent, supporting salt, or the like, unless the technical effects disclosed herein are remarkably impaired. The electrolyte 80 can contain various additives, such as, for example, a gas generating agent, a film forming agent, a dispersant, a thickener, or the like.

The storage device 100 is normally used in a state where the perpendicular direction to the bottom wall 12a of the case 10 (the up-down direction Z) is a vertical direction (a state where the bottom wall 12a is at a bottom side). In this specification, the above-described use state will be also referred to as a "normal use state." As illustrated in FIG. 3, in the storage device 100, there is the electrolyte 80 present between the case body 12 and the electrode body 20 (which will be hereinafter also referred to as an "excess electrolyte 80"). When the storage device 100 is put in a charge state, a negative electrode plate (for example, a negative electrode active material) expands, and the electrolyte 80 is discharged from inside of the electrode body 20. When the storage device 100 is put into a discharge state, the negative electrode plate (for example, the negative electrode active material) contracts, and the electrolyte enters the inside of the electrode body 20. Therefore, an amount of the excess electrolyte 80 fluctuates depending on a charge and discharge state of the storage device 100. With the excess electrolyte 80, an electrolyte shortage inside the electrode body 20 can be prevented, and therefore, the above-described configuration is advantageous from a viewpoint of life of the storage device 100.

As illustrated in FIG. 3, in the storage device 100, in a normal use state, when the storage device 100 is in a fully charged state, a liquid level 80H of the excess electrolyte 80 is located closer to the sealing plate 14 (higher) than a portion (a lower end portion 23b) of the first electrode tab group 23 that is closest to the bottom wall 12a of the case body 12. That is, at least a portion of the first electrode tab group 23 is immersed in the excess electrolyte 80. Thus, the lithium salt concentration in a vicinity of the first electrode tab group 23 and the lithium salt concentration in the excess electrolyte 80 can be easily made uniform. As a result, lithium deposition in the vicinity of the first electrode tab group 23 is suppressed. Furthermore, from a similar viewpoint, the liquid level 80H of the excess electrolyte 80 is preferably located closer to the sealing plate 14 (higher) than a portion (a lower end portion 25b) of the second electrode tab group 25 that is closest to the bottom wall 12a of the case body 12. Note that, in this specification, when the storage device 100 is in the "fully charged state" is assumed when a state of charge (SOC) is 100%.

In the storage device 100, in the normal use state, when the storage device 100 is in the fully charged state, the liquid level 80H of the excess electrolyte 80 is preferably located closer to the bottom wall 12a of the case body 12 than a position at a half of a height H of the second side wall 12c of the case body 12 (see FIG. 3) (that is, a height of the excess electrolyte 80 from the bottom wall 12a to the liquid level 80H is less than 1/2H), more preferably, the height of the excess electrolyte 80 from the bottom wall 12a to the liquid level 80H is 1/3H or less, and, further more preferably, the height of the excess electrolyte 80 from the bottom wall 12a to the liquid level 80H is 1/4H or less. As the excess electrolyte 80 reduces, a remaining space in the case 10 increases, and therefore, the above-described configuration is advantageous from a viewpoint of voltage endurance life. However, when there is no excess electrolyte 80 or when the amount of the excess electrolyte 80 is too small, an electrolyte shortage in the electrode body 20 can occur. Therefore, the height of the excess electrolyte 80 from the bottom wall 12a to the liquid level 80H may be, for example, 1/20H or more, and is preferably 1/10H or more.

In this preferred embodiment, in the perpendicular direction to the bottom wall 12a of the case body 12 (the up-down direction Z), the potion (the lower end portion 23b) of the first electrode tab group 23 that is closest to the bottom wall 12a of the case body 12 is located closer to the bottom wall 12a (lower) than a position at a half of the length L (height) of the first end portion 20a of the electrode body 20 (see FIG. 3). The lower end portion 23b of the first electrode tab group 23 may be arranged closer to the bottom wall 12a (lower) than a position at 1/3, 1/4, or 1/5 of the length L1 (height) of the first end portion 20a of the electrode body 20 from the bottom wall 12a. Thus, even when the amount of the excess electrolyte 80 is reduced, the lower end portion 23b of the first electrode tab group 23 is likely to be immersed in the excess electrolyte 80, and therefore, the above-described configuration is advantageous from a viewpoint of voltage endurance life. Note that a position of the lower end portion 25b of the second electrode tab group 25 is similar to the position of the lower end portion 23b of the first electrode tab group 23 described above. That is, the portion (the lower end portion 25b) of the second electrode tab group 25 that is closest to the bottom wall 12a of the case body 12 is preferably located closer to the bottom wall 12a (lower) than a position at a half of the length L2 (height) of the second end portion 20b of the electrode body 20, and may be arranged closer to the bottom wall 12a (lower) than a position at 1/3, 1/4, or 1/5 of the length L2 (height) of the second end portion 20b of the electrode body 20 from the bottom wall 12a.

In this preferred embodiment, in the perpendicular direction to the bottom wall 12a of the case body 12 (the up-down direction Z), the whole first electrode tab group 23 (from a lower end of the length L3 to an upper end thereof) is located closer to the bottom wall 12a (lower) than a position at a half of the length L1 (height) of the first end portion 20a of the electrode body 20 (see FIG. 3). In other words, a portion of the first electrode tab group 23 that is closest to the sealing plate 14 is located closer to the bottom wall 12a (lower) than the position at the half of the length L1 (height) of the first end portion 20a of the electrode body 20. The whole first electrode tab group 23 may be arranged closer to the bottom wall 12a (lower) than the position at 1/3, 1/4, or 1/5 of the length L1 (height) of the first end portion 20a of the electrode body 20 from the bottom wall 12a. Thus, even when the amount of the excess electrolyte 80 is reduced, the lower end portion 23b of the first electrode tab group 23 is likely to be immersed in the excess electrolyte 80, and therefore, the above-described configuration is advantageous from a viewpoint of voltage endurance life. Note that the position of the lower end portion 25b of the second electrode tab group 25 is similar to the position of the lower end portion 23b of the first electrode tab group 23 described above. That is, the whole second electrode tab group 25 is preferably located closer to the bottom wall 12a (lower) than the position at the half of the length L2 (height) of the second end portion 20b of the electrode body 20, and may be arranged closer to the bottom wall 12a (lower) than the position at 1/3, 1/4, or 1/5 of the length L2 (height) of the second end portion 20b of the electrode body 20 from the bottom wall 12a.

In the storage device 100, in the normal use state, when the storage device 100 is in the fully charged state, a ratio of a portion of the length L3 of the first electrode tab group 23 in the perpendicular direction to the bottom wall 12a of the case body 12 (the up-down direction Z) that is immersed in the excess electrolyte 80 (that is, a ratio of a portion of the first electrode tab group 23 located closer to the bottom wall 12a than the liquid level 80H of the excess electrolyte 80) can be, for example, 5% or more, 10% or more, or 20% or more. The higher the ratio is, the easier it is to make the lithium salt concentration in the vicinity of the first electrode tab group 23 uniform and the more lithium deposition can be suppressed in the vicinity of the first electrode tab group 23. Although the ratio may be 100% from a viewpoint of suppressing lithium deposition, the ratio may be 80% or less, 60% or less, or 40% or less. By reducing the ratio, the amount of the excess electrolyte 80 is reduced, and therefore, the above-described configuration is advantageous from a viewpoint of voltage endurance life. Note that similar applies to the second electrode tab group 25. That is, in the normal use state, when the storage device 100 is in the fully charged state, a ratio of a portion of the length L3 of the second electrode tab group 25 in the perpendicular direction to the bottom wall 12a of the case body 12 (the up-down direction Z) that is immersed in the excess electrolyte 80 can be, for example, 5% or more, 10% or more, or 20% or more. Although the ratio may be 100%, the ratio may be 80% or less, 60% or less, or 40% or less.

It is preferable that, in the normal use state, when the state of charge (SOC) is 15%, the storage device 100 includes the excess electrolyte 80. Since, in general, an SOC when a storage device is shipped is 15% to 30% and a lowest use SOC in a market is 15%, it is preferable from a viewpoint of liquid shortage prevention that there is the excess electrolyte 80 in the above-described state. It is preferable that, when the storage device 100 is in the normal use state and the SOC is 15%, the liquid level 80H of the excess electrolyte 80 is located closer to the bottom wall 12a than the portion (the lower end portion 23b) of the first electrode tab group 23 that is closest to the bottom wall 12a in the direction perpendicular to the bottom wall bottom wall 12a of the case body 12 (the up-down direction Z). With the above-described configuration, the amount of the excess electrolyte 80 is reduced, and a pressure resistance performance is increased.

An example of a method for manufacturing the storage device 100 will be described below. However, the following example is not limiting the method for manufacturing the storage device 100. The method for manufacturing the storage device 100 can include forming the electrode body 20, constructing a storage device assembly, injecting an electrolyte, and charging a battery assembly. A manufacturing method disclosed herein may include some other process step in an arbitrary stage, an order of the process steps may be changed as appropriate, and one or more of the process steps may be omitted as appropriate.

The forming may be similar to that in a known method. The strip-shaped first electrode 22, the strip-shaped second electrode 24, and the two strip-shaped separators 26 are prepared. Next, the strip-shaped first electrode 22, the strip-shaped second electrode 24, and the two strip-shaped separators 26 are stacked such that the separators 26 are interposed between the first electrode 22 and the second electrode 24. At this time, the strip-shaped first electrode 22, the strip-shaped second electrode 24, and the two strip-shaped separators 26 are stacked such that respective longitudinal directions coincide with each other. Then, the electrode body 20 is formed by winding the stacked body around the winding axis WL as a center (see FIG. 8). In the forming, arrangements of the first electrode tab group 23 and the second electrode tab group 25 can be adjusted as appropriate.

The constructing may be similar to that in a known method. An example of the constructing will be described below. However, the following example is not limiting a construction order and the constructing described below may be performed before or after another process step. For example, first, the first electrode terminal 30 is mounted in the terminal insertion hole 18 of the sealing plate 14. At this time, the gasket 90 is arranged between the first electrode terminal 30 and the sealing plate 14. Next, the first electrode first current collector 51 and the interior insulating member 70 are arranged on the inner surface of the sealing plate 14. At this time, the interior insulating member 70 is arranged between the inner surface of the sealing plate 14 and the first electrode first current collector 51. Then, an end portion of the first electrode terminal 30 that protrudes inwardly from the inner surface of the sealing plate 14 is caulked (rivetted), and thus, the first electrode first current collector 51 and the interior insulating member 70 are fixed to the sealing plate 14. As for the second electrode terminal 40, similarly, the second electrode terminal 40 is inserted through the terminal insertion hole 19, and the gasket 90, the second electrode first current collector 61, and the interior insulating member 70 are fixed to the sealing plate 14. On the outer surface of the sealing plate 14, the exterior insulating member 92 is arranged around the gasket 90 mounted on the first electrode terminal 30. The first electrode external conductive member 32 is mounted on the arranged exterior insulating member 92, and the first electrode terminal 30 and the first electrode external conductive member 32 are electrically connected. The second electrode external conductive member 42 can be provided in a similar manner to the first electrode external conductive member 32, and therefore, description thereof will be omitted.

In the constructing, as illustrated in FIG. 7, the first electrode second current collector 52 is joined to the first electrode tab group 23 of the electrode body 20, and the second electrode second current collector 62 is joined to the second electrode tab group 25. There is no particular limitation on a joining method, and for example, ultrasonic joining, resistance welding, laser welding, or the like may be employed. Thereafter, the first electrode first current collector 51 and the first electrode second current collector 52 that are mounted on the sealing plate 14 are joined and the second electrode first current collector 61 and the second electrode second current collector 62 that are mounted on the sealing plate 14 are joined, thus forming an assembly illustrated in FIG. 6. Note that there is no particular limitation on the joining method. For example, ultrasonic joining, resistance welding, laser welding, or the like may be employed.

Next, the assembly illustrated in FIG. 6 is inserted into the case body 12. At this time, the first electrode tab group 23 is arranged at a side of one of the second side walls 12c, and the second electrode tab group 25 is arranged at a side of the other one of the second side walls 12c. Thereafter, the sealing plate 14 is mounted on the case body 12 by joining (for example, laser welding) the sealing plate 14 to the peripheral edge of the opening 12h of the case body 12. In the above-described manner, a storage device assembly is formed.

In the injecting, the electrolyte 80 is injected into the case 10 from the liquid injection hole 15 of the sealing plate 14 in accordance with a known method. At this time, considering an inside volume of the case 10 and a volume of the electrode body 20, adjustment can be performed such that, in the normal use state, when the storage device 100 is in the fully charged state, the liquid level 80H of the excess electrolyte 80 is located closer to the sealing plate 14 than the lower end portion 23b of the first electrode tab group 23. By changing an amount of the electrolyte 80 to be injected, adjustment can be made to achieve the above-described range for a positional relation between the liquid level 80H of the excess electrolyte 80 and the first electrode tab group 23. Note that, for example, an X ray may be used to detect the amount of the excess electrolyte 80, a sensor may be mounted inside the case 10 to grasp the amount of the excess electrolyte 80, or the like. After injecting the electrolyte 80, the liquid injection hole 15 is sealed by the sealing member 16.

The storage device 100 can be used for various applications and is, for example, used as a battery for a vehicle. There is no particular limitation on a vehicle type. Examples of the vehicle type include, for example, a plug-in hybrid electric vehicle (PHEV), a hybrid electric vehicle (HEV), a battery electric vehicle (BEV), or the like. Moreover, the storage device 100 can be preferably used as a cell stack obtained by arranging a plurality of storage devices 100 in a predetermined arrangement direction and applying a load thereto from the arrangement direction by a restraining mechanism.

One preferred embodiment of the present disclosure has been described above. However, the preferred embodiment described above is merely an example. The present disclosure can be implemented in various other embodiments. The present disclosure can be carried out based on contents disclosed in this specification and the common general technical knowledge in the field. The technology described in the scope of claims includes various modifications and changes of the preferred embodiment described as an example above. For example, a portion of the preferred embodiment described above can be replaced with some other modified aspect. Some other modified aspect can be added to the preferred embodiment described above. Additionally, a technical feature may be deleted as appropriate unless the technical feature is described as an essential element.

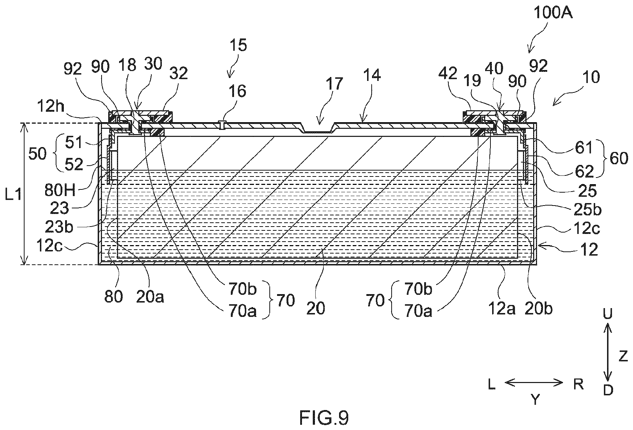

For example, in the above-described embodiment, as illustrated in FIG. 3, in the perpendicular direction to the bottom wall 12a of the case body 12 (the up-down direction Z), the lower end portion 23b of the first electrode tab group 23 is located closer to the bottom wall 12a (lower) than the position at the half of the length L (height) of the first end portion 20a of the electrode body 20. However, the position of the first electrode tab group 23 is not limited thereto. FIG. 9 is a cross-sectional view of a storage device 100A according to a second preferred embodiment, corresponding to FIG. 3. In the storage device 100A, the lower end portion 23b of the first electrode tab group 23 is located closer to the sealing plate 14 (higher) than the position at the half of the length L1 (height) of the first end portion 20a of the electrode body 20. Also, in such an aspect, in the normal use state, the liquid level 80H of the excess electrolyte 80 is located closer to the sealing plate 14 than the lower end portion 23b of the first electrode tab group 23, so that lithium deposition in the vicinity of the first electrode tab group 23 can be suppressed.

As described above, the following items are given as specific aspects of the technology disclosed herein.
First Item: A storage device including an electrode body that includes a first electrode and a second electrode, an electrolyte including an organic solvent and a lithium salt, and a case accommodating the electrode body and the electrolyte, and configured such that the electrode body includes a first electrode tab group including a plurality of first electrode tabs that protrude from a first end portion, and a second electrode tab group including a plurality of second electrode tabs that protrude from a second end portion, the case includes a case body including a bottom wall, a pair of first side walls extending from the bottom wall and opposed to each other, a pair of second side walls extending from the bottom wall and opposed to each other, and an opening opposed to the bottom wall, and a sealing plate that seals the opening, the first electrode tab group is arranged on a side at one of the pair of second side walls inside the case, the second electrode tab group is arranged on a side at the other one of the pair of second side walls inside the case, and when the storage device is in a fully charged state, the storage device includes an excess electrolyte that is the electrolyte present between the case body and the electrode body in a state where a perpendicular direction to the bottom wall is a vertical direction, and a liquid level of the excess electrolyte is located closer to the sealing plate than a portion of the first electrode tab group that is closest to the bottom wall.
Second Item: The storage device described in the first item, the storage device being configured such that, in the perpendicular direction to the bottom wall, a ratio (L3/L1) of a length L3 of the first electrode tab group to a length L1 of the first end portion of the electrode body is 0.1 to 0.5, and a ratio (L4/L2) of a length L4 of the second electrode tab group to a length L2 of the second end portion of the electrode body is 0.1 to 0.5.
Third Item: The storage device described in the first or second item, the storage device being configured such that the liquid level of the excess electrolyte is located closer to the bottom wall than a position at a half of a height of the second side walls.
Fourth Item: The storage device described in any one of the first to third items, the storage device being configured such that, when a state of charge (SOC) of the storage device is 15%, the liquid level of the excess electrolyte is located closer to the bottom wall than the portion of the first electrode tab group that is closest to the bottom wall.
Fifth Item: The storage device described in any one of the first to fourth items, the storage device being configured such that, in the perpendicular direction to the bottom wall, the portion of the first electrode tab group that is closest to the bottom wall is located closer to the bottom wall than a position at a half of a length of the first end portion.

- 10: Case
- 12: Case body
- 12a: Bottom wall
- 12b: First side wall
- 12c: Second side wall
- 14: Sealing plate
- 20: Electrode body
- 22: First electrode
- 23: First electrode tab group
- 24: Second electrode
- 25: Second electrode tab group
- 30: First electrode terminal
- 40: Second electrode terminal
- 80: Electrolyte (excess electrolyte)
- 80H: Liquid level
- 100, 100A: Storage device

## Claims

1. A storage device (100) comprising:
an electrode body (20) including a first electrode (22) and a second electrode (24);
an electrolyte (80) including an organic solvent and a lithium salt; and
a case (10) accommodating the electrode body (20) and the electrolyte (80),
wherein
the electrode body (20) includes
a first electrode tab group (23) including a plurality of first electrode tabs (22t) that protrude from a first end portion (20a), and
a second electrode tab group (25) including a plurality of second electrode tabs (24t) that protrude from a second end portion (20b),
the case (10) includes
a case body (12) including
a bottom wall (12a),
a pair of first side walls (12b) extending from the bottom wall (12a) and opposed to each other,
a pair of second side walls (12c) extending from the bottom wall (12a) and opposed to each other, and
an opening opposed to the bottom wall (12a), and
a sealing plate (14) that seals the opening,
the first electrode tab group (23) is arranged at a side (L) of one of the pair of second side walls (12c) inside the case (10),
the second electrode tab group (25) is arranged at a side (R) of the other one of the pair of second side walls (12c) inside the case (10), and
when the storage device (100) is in a fully charged state,
the storage device (100) includes an excess electrolyte (80) that is the electrolyte present between the case body (12) and the electrode body (20) in a state where a perpendicular direction to the bottom wall (12a) is a vertical direction (Z), and
a liquid level of the excess electrolyte (80) is located closer to the sealing plate (14) than a portion (23b) of the first electrode tab group (23) that is closest to the bottom wall (12a).

2. The storage device (100) according to claim 1, wherein
in the perpendicular direction (Z) to the bottom wall (12a),
a ratio (L3/L1) of a length (L3) of the first electrode tab group (23) to a length (L1) of the first end portion (20a) of the electrode body (20) is 0.1 to 0.5, and
a ratio (L4/L2) of a length (L4) of the second electrode tab group (25) to a length (L2) of the second end portion (20b) of the electrode body (20) is 0.1 to 0.5.

3. The storage device (100) according to claim 1 or 2, wherein
the liquid level of the excess electrolyte (80) is located closer to the bottom wall (12a) than a position at a half of a height (H) of the second side walls (12c).

4. The storage device (100) according to any one of claims 1 to 3, wherein
when a state of charge (SOC) of the storage device (100) is 15%, the liquid level of the excess electrolyte (80) is located closer to the bottom wall (12a) than the portion (23b) of the first electrode tab group (23) that is closest to the bottom wall (12a).

5. The storage device (100) according to any one of claims 1 to 4, wherein
in the perpendicular direction (Z) to the bottom wall (12a), the portion (23b) of the first electrode tab group (23) that is closest to the bottom wall (12a) is located closer to the bottom wall (12a) than a position at a half of a length of the first end portion (20a).

6. The storage device (100) according to any one of claims 1 to 5, wherein
each of the first electrode tabs (22t) has a raised shape, and
each of the second electrode tabs (24t) has a raised shape.
